# EUROPÄISCHE PATENTSCHRIFT

(11) **EP 4 098 560 B1**
(45) Veröffentlichungstag und Bekanntmachung des Hinweises auf die Patenterteilung: **12.02.2025**
(21) Anmeldenummer: 21176814.8
(22) Anmeldetag: 31.05.2021
(51) Int. Cl.: B64D 11/00, B64C 1/40

(54) **BEFESTIGUNGSSYSTEM ZUR HÄNGENDEN MONTAGE VON STAUFÄCHERN, INSBESONDERE IN FLUGZEUGEN**
FASTENING SYSTEM FOR SUSPENDED INSTALLATION OF STORAGE COMPARTMENTS, ESPECIALLY IN AIRCRAFT
SYSTÈME DE FIXATION DESTINÉ AU MONTAGE SUSPENDU DES COMPARTIMENTS DE RANGEMENT, EN PARTICULIER DANS LES AVIONS

(43) Veröffentlichungstag der Anmeldung: 07.12.2022
(73) Patentinhaber: Airbus Operations GmbH, 21129 Hamburg (DE)
(72) Erfinder: Wesseloh, Marc, 21129 Hamburg (DE); Marx, Sergej, 21129 Hamburg (DE)
(74) Vertreter: KASTEL Patentanwälte PartG mbB

(56) Entgegenhaltungen:
- EP-A1- 2 265 492
- EP-B1- 2 265 492
- FR-A1- 2 685 756
- US-A1- 2008 136 071

## Beschreibung

Die Erfindung betrifft ein Befestigungssystem zur hängenden Montage von Staufächern, insbesondere in Flugzeugen.

In Passagierbereichen von Verkehrsmitteln, wie beispielsweise in Kabinen von Verkehrsflugzeugen, sind üblicherweise hängend montierbare Staufächer angeordnet, die zumeist als Gepäckbox für das Handgepäck sowie für Kleidungsstücke und sonstige Gegenstände der Passagiere dienen und als Overhead Stowage Compartments oder Hatracks bezeichnet werden. Zur Befestigung der Staufächer an einer Tragestruktur des Flugzeugs dienen Befestigungssysteme, mit denen die Staufächer hängend montiert werden können und auf diese Weise Deckencontainer zum Beispiel in der Passagierkabine bilden.

Die Staufächer sind oftmals sehr groß und müssen eine hohe Tragkraft aufweisen, um zum Beispiel das Handgepäck einer Vielzahl von Passagieren aufzunehmen. Dennoch sollte die Montage und auch die Demontage der Staufächer möglichst schnell und durch möglichst wenig Personal erfolgen können, und auch möglichst ohne die Verwendung von Werkzeugen. Weiterhin müssen die Befestigungssysteme für die Staufächer bzw. Gepäckablagen hohen Belastungen standhalten, um im beladenen Zustand den im Flugbetrieb auftretenden Kräften und den damit verbundenen Belastungen standzuhalten, und somit eine sichere Befestigung der Staufächer zu gewährleisten.

Die hängende Befestigung der Staufächer an der Tragestruktur erfolgt zumeist mittels Befestigungssystemen, die jeweils ein Tragösen-Paar aufweisen, und einen Bolzen, der in die beiden Tragösen eingeführt wird, um diese miteinander zu verbinden. Dazu ist zum Beispiel eine Tragöse auf der Seite eines Befestigungselements und eine andere Tragöse auf der Seite des Staufachs angeordnet. Um den Bolzen in die Tragösen des Tragösen-Paares einzuschieben, werden die beiden Tragösen fluchtend zueinander ausgerichtet.

EP 2265 492 A1 offenbart ein Verfahren zum Befestigen eines Elements einer Flugzeuginnenausstattung an einer tragenden Struktur in einem Flugzeug. Das Elements wird mit der Flugzeuginnenausstattung unter Verwendung einer ersten Arretierungsvorrichtung an einer ersten Fixierungsvorrichtung verbunden, relativ zur tragenden Struktur verschwenkt und unter Verwendung einer zweiten Arretierungsvorrichtung an einer zweiten Fixierungsvorrichtung verbunden. Dadurch wird das Element der Flugzeuginnenausstattung relativ zur tragenden Struktur festgelegt.

US 2008 / 0 136 071 A1 offenbart einen elastomeren Zugstangenkopf-Isolator und einen elastomeren Patronen-Isolator.

FR 2 685 756 A1 offenbart Teile einer schall- und wärmeisolierenden Matratze, die so modifiziert sind, dass die Wasserundurchlässigkeit der Matratze und ihre Isolationseigenschaften erhalten bleiben, wenn sie an einer Unterlage befestigt wird. Die Matratze ist mit einer Öffnung und einer Schaumstoffeinlage versehen, die in der Öffnung angeordnet und mit einer Blende versehen ist. Die Einlage wird in der Öffnung durch einen Klebestreifen gehalten, der auf die Schaumstoffeinlage und die Matratze geklebt ist.

Die Druckschrift EP 2563 659 B1 beschreibt ein Befestigungssystem für hängend montierbare Deckencontainer, mit einem Paar an einer Tragstruktur bzw. an einem Deckencontainer anbringbaren Tragösen, und mit einem Hauptbolzen zum lösbaren Verbinden der Tragösen. Der Hauptbolzen ist in einer Hauptbolzenführung in Richtung der ersten Tragöse federnd vorgespannt und nimmt bei noch nicht montiertem Deckencontainer eine Endstellung ein, in welcher der Hauptbolzen aus der Hauptbolzenführung ausgefahren ist. Durch die Federvorspannung wird der Hauptbolzen während der Aufwärtsbewegung des Deckencontainers in seine Montageposition mit Hilfe einer schrägen Rampe, die an der ersten Tragöse ausgebildet ist, in eine Aufnahme der ersten Tragöse ausgefahren, wo er formschlüssig verriegelbar ist. Dabei ist ein Anschlag als ein zentral angeordneter Zapfen ausgebildet, und der Hauptbolzen weist eine komplementär dazu ausgebildete Bohrung auf, in welcher der Zapfen aufnehmbar ist.

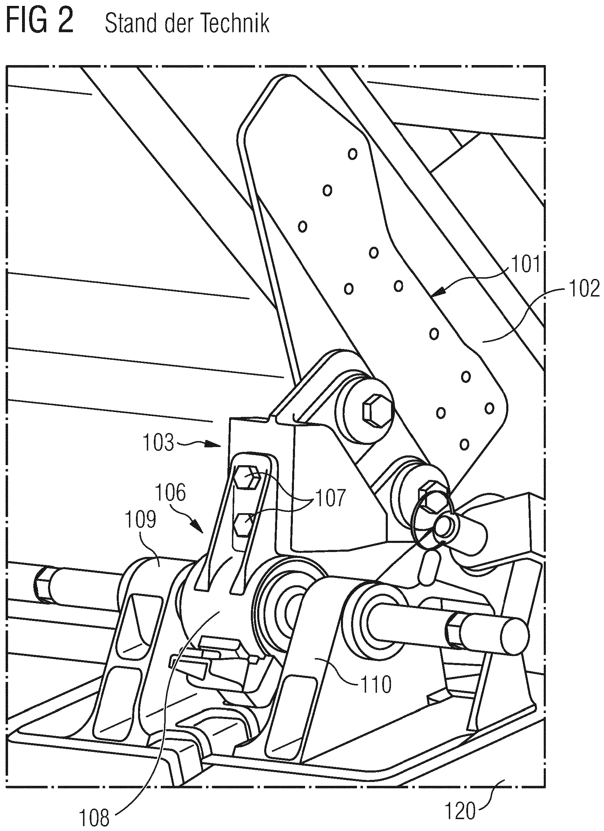

Fig. 2 zeigt ein bekanntes Befestigungssystem für einen Deckencontainer 120, der ein Overhead Stowage Compartment (OHSC) bzw. eine Gepäckablage oder ein Hatrack in der Kabine eines Flugzeugs bildet. Das bekannte Befestigungssystem ist zum Beispiel so ausgestaltet, wie es in der oben genannten Patentveröffentlichung detailliert beschrieben ist. Es umfasst ein plattenförmiges, erstes Befestigungselement 101, das zur Befestigung an einer Tragstruktur bzw. an einem Spant 102 des Flugzeugs dient. Ein zweites Befestigungselement 103 ist mit dem ersten Befestigungselement 101 verschraubt.

Das zweite Befestigungselement 103 ist mit einem dritten Befestigungselement 106 mit Hilfe von Schrauben 107 verschraubt. Das dritte Befestigungselement 106 ist mit einer Doppeltragöse 108 versehen, an deren beiden Seiten jeweils eine weitere Tragöse 109, 110 fluchtend dazu angeordnet ist. In den Tragösen 109, 110 ist jeweils ein Bolzen angeordnet ist, der durch Einführen in die zentrale Doppeltragöse 108 von beiden Seiten her den Deckencontainer 120 an dem dritten Befestigungselement 106 befestigt. Zur Fixierung ist ein Klick- und Schnappsystem vorgesehen.

Durch das bekannte Befestigungssystem soll eine vorteilhafte Montage innerhalb einer geringen Installationszeit ermöglicht werden. Jedoch besteht ein Nachteil zum Beispiel darin, dass seine Teile in der Herstellung relativ teuer sind und ein relativ hohes Gewicht haben. Auch muss das Hatrack bzw. das OHSC beim Montieren geschüttelt werden, um die Klick- und Schnappfunktion zu ermöglichen. Darüber hinaus ist ein weiteres Rigg notwendig, um unkontrollierte Kräfte in den Rahmen zu vermeiden. Hinzu kommt, dass eine sehr komplexe Feinjustierung erforderlich ist, die zum Beispiel 15 Minuten und mehr pro verwendetem Befestigungssystem erfordern kann.

Ein weiteres Problem stellt Kondenswasser dar, das sich an der Tragstruktur in großen Mengen bildet, insbesondere bei einem Flugzeug, wenn es verschiedene Flughöhen durchquert. Dabei kann das Kondenswasser im Bereich des Befestigungssystems zum Staufach und in den Kabineninnenraum gelangen.

Die Erfindung hat sich zur Aufgabe gestellt, die oben genannten Nachteile zu überwinden. Insbesondere soll ein Befestigungssystem zur hängenden Montage von Staufächern bzw. Overhead Stowage Compartments geschaffen werden, mit dem das Eindringen von Kondenswasser, das sich an der Tragstruktur bildet, in den Innenraumbereich wirksam verhindert wird. Weiterhin soll durch das Befestigungssystem Gewicht reduziert werden können. Darüber hinaus sollen mit dem Befestigungssystem Zeit und Kosten gespart werden können, insbesondere bei der Montage.

Die Aufgabe wird gelöst durch das Befestigungssystem gemäß Patentanspruch 1. Vorteilhafte Ausgestaltungen sind Gegenstand der Unteransprüche.

Durch die Erfindung wird ein Befestigungssystem zur hängenden Montage von Staufächern insbesondere in Flugzeugen geschaffen, umfassend: ein erstes Befestigungselement, das zur Befestigung an einer Tragstruktur ausgebildet ist; ein zweites Befestigungselement, das zur Befestigung an einem Staufach zur Aufnahme von Gegenständen ausgebildet ist; und eine Verbindungsanordnung, die zur flächigen Befestigung auf dem ersten Befestigungselement ausgebildet ist, wobei die Verbindungsanordnung und das zweite Befestigungselement jeweils eine Tragöse zur Aufnahme eines Befestigungsbolzens umfassen, um die Verbindungsanordnung an dem zweiten Befestigungselement zu befestigen; und das erste Befestigungselement und die Verbindungsanordnung jeweils eine Befestigungsfläche zur gegenseitigen Befestigung aufweisen, so dass zwischen den Befestigungsflächen und/oder zwischen der Tragstruktur und dem ersten Befestigungselement eine durchgehende Isolationsschicht zur Isolierung der Tragstruktur positionierbar ist, um die Tragstruktur durchgehend gegenüber der Verbindungsanordnung zu isolieren.

Dadurch wird es möglich, eine Schicht zur Isolierung einer Primärstruktur zu installieren, ohne einen Schnitt oder eine Aussparung in der Isolierschicht vornehmen zu müssen. Damit wird verhindert, dass Kondenswasser in die Kabine gelangt.

Durch die Erfindung kann die Tragstruktur zum Beispiel zusammen mit dem ersten Befestigungselement durchgehend gegenüber der Verbindungsanordnung isoliert werden. Beispielsweise sind zu diesem Zweck das erste Befestigungselement und die Verbindungsanordnung derart gestaltet, dass ihre gegenseitige Verbindung geschraubt werden kann. Zum Beispiel wird das erste Befestigungselement mit der Tragstruktur unlösbar verbunden, insbesondere durch Nieten.

Das erste Befestigungselement kann in vorteilhafterweise aber auch so gestaltet sein, dass es mit der Tragstruktur verschraubbar ist. Dadurch kann die Isolierung auch zwischen der Tragstruktur bzw. Primärstruktur und dem ersten Befestigungselement eingeklemmt werden.

Auf diese Weise bietet die Erfindung eine erhöhte Flexibilität bei der Montage der Isolationsschicht, da diese entsprechend den jeweiligen Anforderungen derart positioniert und montiert werden kann, dass im Bereich des Befestigungssystems keine Nässe von der Tragstruktur zum Staufach gelangen kann.

Die Verbindungsanordnung umfasst ein erstes Verbindungselement und mindestens ein zweites Verbindungselement, die in ihrer Lage relativ zueinander einstellbar und fixierbar sind.

Dadurch kann die Position der ersten Tragöse in Bezug auf die Position der zweiten Tragöse schnell eingestellt werden.

Die Verbindungselemente weisen jeweils eine Verbindungsfläche mit einer Verzahnung zur gegenseitigen Fixierung auf.

Dadurch können die Verbindungsflächen beim gegenseitigen Befestigen der Verbindungselemente ineinandergreifen, was eine schnelle und zuverlässige

Justierung der Position der Verbindungselemente relativ zueinander und damit eine schnelle Einstellung der Position der Tragöse der Verbindungsanordnung ermöglicht. Es wird eine besonders belastbare justierbare Verbindung geschaffen.

Bevorzugt ist die Verbindungsanordnung aus Kunststoff gefertigt.

Dadurch wird das Gewicht der Befestigungen der Staukästen eines Flugzeugs erheblich reduziert.

Vorteilhaft umfasst das Befestigungssystem eine mit einer Verzahnung versehene Verzahnungsplatte, die aus Kunststoff gefertigt ist.

Insbesondere ist die Verzahnungsplatte an einer verzahnten Seitenfläche eines der Verbindungselemente befestigbar, um das Verbindungselement zwischen der Verzahnungsplatte und dem anderen Verbindungselement durch gegenseitige Verzahnung in einer gewünschten Position zu fixieren.

Bevorzugt ist der Kunststoff ein kohlefaserverstärkter Kunststoff und/oder ein glasfaserverstärkter Kunststoff.

Insbesondere ist das erste Befestigungselement aus Aluminium gefertigt.

Vorteilhaft umfasst das Befestigungssystem einen Schwingungsdämpfer, der in zumindest einer der Tragösen angeordnet ist.

Bevorzugt ist die Verbindungsanordnung durch Spritzgießen und/oder durch Überformen hergestellt.

Vorteilhafterweise ist die Verzahnungsplatte durch Spritzgießen und/oder durch Überformen hergestellt.

Bevorzugt sind die Verbindungsflächen der Verbindungselemente im zusammengefügten Zustand des Befestigungssystems parallel zu einer

Befestigungsfläche zur Befestigung des ersten Befestigungselements an der Tragestruktur ausgerichtet.

Vorteilhaft sind die Verbindungsflächen der Verbindungselemente im zusammengefügten Zustand des Befestigungssystems parallel zu einer Befestigungsfläche zwischen dem ersten Befestigungselement und dem ersten Verbindungselement ausgerichtet.

Die Verbindungsflächen der Verbindungselemente im zusammengefügten Zustand des Befestigungssystems können in vorteilhafter Weise auch senkrecht zu einer Befestigungsfläche zwischen dem ersten Befestigungselement und dem ersten Verbindungselement ausgerichtet sein.

Bevorzugt ist das zweite Verbindungselement zumindest in einem Teilbereich plattenförmig ausgebildet.

Beispielsweise ist die Tragöse der Verbindungsanordnung in dem plattenförmigen Bereich des zweiten Verbindungselement ausgebildet.

Vorteilhafterweise ist das zweite Verbindungselement flächig ausgebildet. Dabei geht es zum Beispiel von einem relativ breiten Teil im Bereich seiner Verbindungsfläche, die zur Verbindung mit dem zum ersten Verbindungselement dient, stetig in einen relativ schmalen Teil über, in dem bevorzugt die Tragöse der Verbindungsanordnung ausgebildet ist.

Bevorzugt sind Markierungen wie beispielsweise Kerben oder kleine Löcher in den einzelnen Bauteilen bzw. Befestigungs- und Verbindungselementen integriert. Dadurch wird eine Vorausrichtung bei der Montage der Bauteile gewährleistet. Wenn diese Markierungen übereinstimmen sind die Bauteile optimal vorausgerichtet, wodurch die Montage vereinfacht wird. Später, d.h. bei der Ausrichtung der Staufächer, die beispielsweise als Hatracks ausgebildet sind, kann dann gegebenenfalls von der Vorausrichtung abgewichen werden

Im Folgenden werden bevorzugte Ausführungsformen der Erfindung anhand der beigefügten Zeichnungen näher erläutert. Dabei zeigt:
- Fig. 1: ein Befestigungssystem gemäß einer bevorzugten Ausführungsform der Erfindung als schematische Ansicht schräg von vorne;
- Fig. 2: eine schematische Darstellung eines bekannten Befestigungssystems für Deckencontainer, wie es eingangs beschrieben ist;
- Fig. 3: ein Befestigungssystem gemäß einer besonders bevorzugten Ausführungsform der Erfindung als schematische Ansicht seiner Vorderseite;
- Fig. 4: das in Fig. 3 gezeigte Befestigungssystem in einer schematischen Explosionsdarstellung;
- Fig. 5: eine schematische Ansicht der Rückseite des in den Figuren 3 und 4 gezeigten Befestigungssystems;
- Fig. 6: eine schematische Seitenansicht des in den Figuren 3 bis 5 gezeigten Befestigungssystems, das an einer Tragstruktur befestigt ist;
- Fig. 7: eine schematische Seitenansicht des in den Figuren 3 bis 5 gezeigten Befestigungssystems, zusammen mit seinem Befestigungselement zur Befestigung an einem Staufach; und
- Fig. 8: ein Befestigungssystem gemäß einer anderen bevorzugten Ausführungsform der Erfindung, das an einer Tragstruktur befestigt ist, in einer schematischen räumlichen Ansicht schräg von vorne.

In den Figuren sind gleiche oder einander entsprechende Elemente jeweils mit den gleichen Bezugszeichen bezeichnet und werden daher nicht wiederholt beschrieben, sofern es nicht zweckmäßig erscheint. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

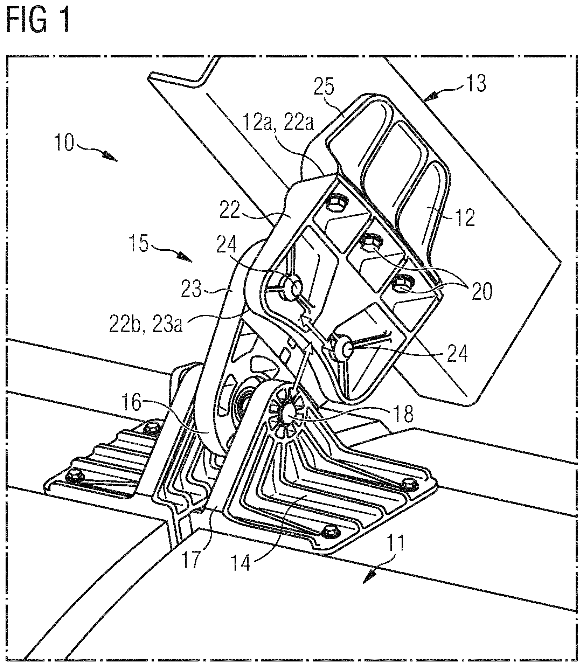

**Figur 1** zeigt ein Befestigungssystem 10 gemäß einer bevorzugten Ausführungsform der Erfindung in einer räumlichen schematischen Ansicht schräg auf seine Vorderseite. Das Befestigungssystem 10 dient zur hängenden Montage von Staufächern 11 in einem Flugzeug. Die Staufächer 11 können zum Beispiel Gepäckfächer, Deckencontainer, Ablagefächer, Ablagebehälter, Staubehälter oder Ähnliches sein, die hängend zum Beispiel in einer Flugzeugkabinen montiert oder montierbar sind und insbesondere sogenannte Overhead Storage Compartments oder Hatracks bilden.

Das Befestigungssystem 10 umfasst ein erstes Befestigungselement 12, das zur Befestigung an einer Tragstruktur 13 ausgebildet ist. Hierzu weist das erste Befestigungselement 12 eine Befestigungsfläche 25 auf, mit der es an der Tragstruktur 13 befestigt wird. Die Tragstruktur 13 ist zum Beispiel ein Spant eines Flugzeugrumpfes.

Weiterhin umfasst das Befestigungssystem 10 ein zweites Befestigungselement 14, das zur Befestigung an dem hängend zu montierenden Staufach 11 ausgebildet ist, von dem in Figur 1 ein Teilbereich dargestellt ist. Zwischen dem ersten Befestigungselement 12 und dem zweiten Befestigungselement 14 ist eine Verbindungsanordnung 15 vorgesehen, die zur flächigen Befestigung auf dem ersten Befestigungselements 12 ausgebildet ist.

Die Verbindungsanordnung 15 umfasst eine Tragöse 16 und das zweite Befestigungselement 14 umfasst eine Tragöse 17. Die Tragösen 16, 17 sind zur Aufnahme eines Befestigungsbolzens 18 ausgebildet sind, sodass dieser durch Aufnahme in den Tragösen 16 und 17 die Verbindungsanordnung 15 an dem zweiten Befestigungselement 14 befestigt, wenn die Tragösen 16, 17 fluchtend zueinander angeordnet sind.

In dem hier gezeigten Beispiel ist auf beiden Seiten der Tragöse 16 jeweils eine Tragöse 17 eines zweiten Befestigungselements 14 angeordnet. Es ist aber ebenso möglich, nur an einer Seite eine Tragöse 17 eines zweiten Befestigungselements 14 anzuordnen.

Das erste Befestigungselement 12 und die Verbindungsanordnung 15 umfassen jeweils eine Befestigungsfläche 12a bzw. 22a, über welche die Verbindungsanordnung 15 an dem ersten Befestigungselement 12 befestigbar bzw. befestigt ist. Die Befestigung erfolgt mittels Schrauben 20.

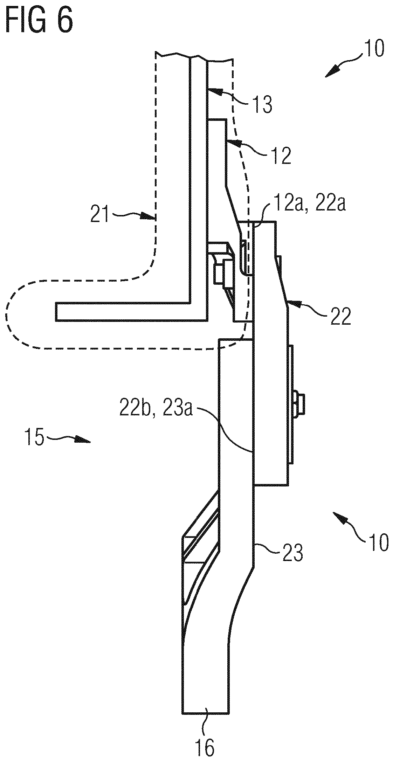

Auf diese Weise wird ermöglicht, dass bei der Montage zwischen der Befestigungsflächen 12a, 22a eine durchgehende Isolationsschicht 21 zur Isolierung der Tragstruktur 13 positionierbar und installierbar ist, die in Figur 6 gezeigt ist. Dadurch kann die Tragstruktur 13 gemeinsam mit dem an der Tragstruktur 13 befestigten ersten Befestigungselement 12 durchgehend gegenüber der Verbindungsanordnung 15 isoliert werden, ohne dass Schlitze, Aussparungen oder Ähnliches in die Isolationsschicht 21 eingebracht werden müssen.

Bei der Montage werden lediglich die Schrauben 20 durch die Isolationsschicht 21 hindurch gesteckt, so dass sie im Bereich zwischen dem ersten Befestigungselement 12 und der Verbindungsanordnung 15 bündig und dicht gegen Nässe von der Isolationsschicht 21 umgeben sind. Auf diese Weise kann kein Kondenswasser, welches sich an der Tragstruktur 13 zum Beispiel bei unterschiedlichen Flughöhen in großer Menge bildet, im Befestigungsbereich der Staufächer durch Unterbrechungen der Isolationsschicht 21 oder durch darin eingebrachte Öffnungen hindurch dringen und in den Kabinenbereich gelangen.

Die Verbindungsanordnung 15 umfasst ein erstes Verbindungselement 22 und ein zweites Verbindungselement 23, deren Lage relativ zueinander einstellbar und fixierbar ist. Das Befestigungssystem 10 umfasst somit das erste Befestigungselement 12, das zweite Befestigungselement 14 und die Verbindungsanordnung 15 mit ihrem ersten Verbindungselement 22 und ihrem zweiten Verbindungselement 23.

Das erste Befestigungselement 12 ist als ein sogenanntes A-Bracket ausgebildet, das heißt als eine Halterung der Klasse A, die an einer Tragstruktur eines Flugzeugs befestigbar und zur Befestigung eines sogenannten B-Brackets ausgebildet ist, das heißt einer Halterung der Klasse B.

Die Verbindungsanordnung 15 bzw. ihr erstes Verbindungselement 22 ist als ein B-Bracket ausgebildet, welches an dem A-Bracket bzw. dem ersten Befestigungselement 12 mittels der Schrauben 20 befestigbar ist.

Das zweite Verbindungselement 23 der Verbindungsanordnung 15 ist ebenfalls als B-Bracket ausgebildet. Bei der Montage wird es mittels Schrauben 24 mit dem ersten Verbindungselement 22 verbunden. Dabei ist das zweite Verbindungselement 23 in zwei Richtungen bewegbar an dem ersten Verbindungselement 22 befestigt, wobei die Bewegungsrichtungen senkrecht zu einander ausgerichtet sind und in der Figur durch Doppelpfeile gekennzeichnet sind.

Auf diese Weise kann die Position der Tragöse 16 relativ zum ersten Verbindungselement 22 und damit auch relativ zur Tragstruktur 13 in zwei Freiheitsgraden eingestellt bzw. justiert werden, bevor mithilfe der Befestigungsmittel 24 eine Fixierung in der passenden Position erfolgt. Dadurch können die Staufächer 11 passend justiert werden, was neben der dadurch bewirkten mechanischen Verbesserung auch zu einheitlichen, gleichmäßig verlaufenden optischen Linien der so montierten Staufächer führt.

Im Bereich der Verbindung zwischen dem ersten Verbindungselement 22 und dem zweiten Verbindungselement 23 weisen diese jeweils eine Verbindungsfläche 22b bzw. 23a auf, die bei der Montage einander zugewandt sind und jeweils mit einer Verzahnung versehen sind. Dadurch ist die Lage des zweiten Verbindungselements 23 in Bezug auf das erste Verbindungselemente 22 justierbar, wobei anschließend durch Anziehen der Schrauben 24 die Verzahnungen der Verbindungsflächen 22b, 23a ineinandergreifen und dadurch eine kraft- und formschlüssige Verbindung der Verbindungselements 22, 23 bewirken. Dadurch ist die Verbindung besonders stabil, so dass die justierte Position auch unter besonders großen Lasten beibehalten wird.

Das erste Befestigungselement 12 ist aus Aluminium gefertigt und wird an der Tragstruktur 13 bzw. dem Spant des Flugzeugrumpfes zum Beispiel durch Nieten befestigt. Die Verbindungsanordnung 15 mit ihren Verbindungselementen 22, 23 ist aus Kunststoff gefertigt, vorzugsweise aus faserverstärktem bzw. kohlefaserverstärktem und/oder glasfaserverstärktem Kunststoff. Insbesondere können die Verbindungselemente 22, 23 bzw. die Verbindungsanordnung 15 durch ein Spritzgussverfahren hergestellt werden.

In dem hier gezeigten Ausführungsbeispiel sind die Verbindungsflächen 22b, 23a der Verbindungselemente 22 bzw. 23 senkrecht zu den Befestigungsflächen 12a, 22a ausgerichtet, mit denen die Verbindungsanordnung 15 durch ihr erstes Verbindungselement 22 an dem ersten Befestigungselement 12 befestigt bzw. befestigbar ist.

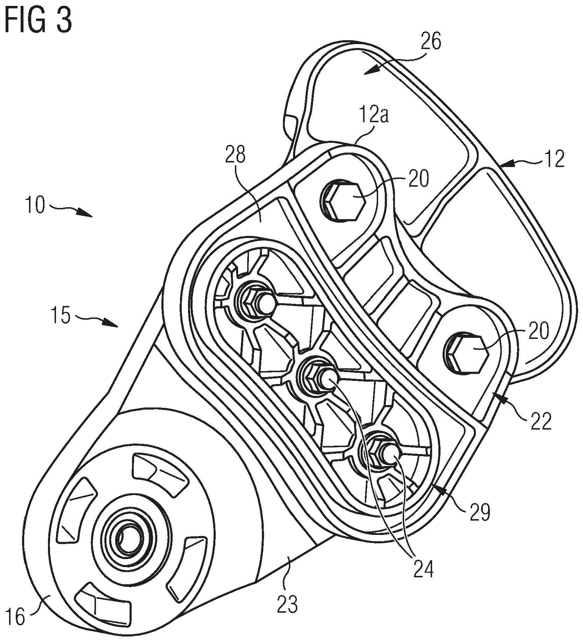

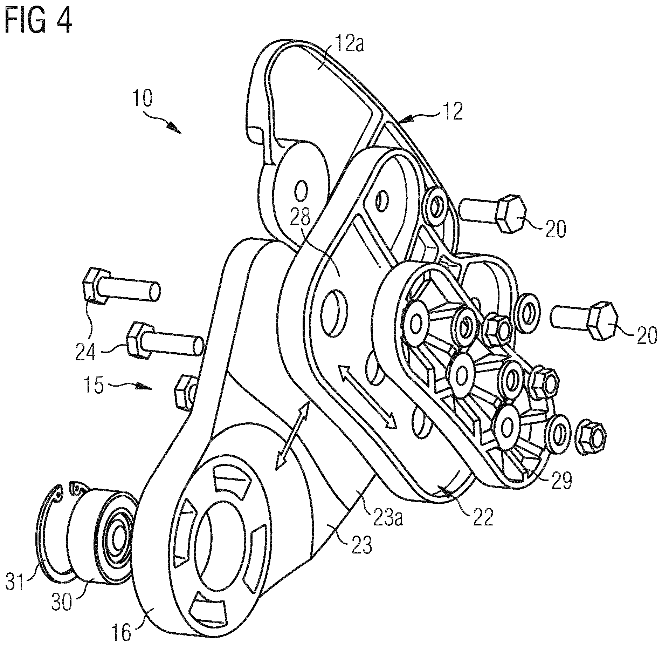

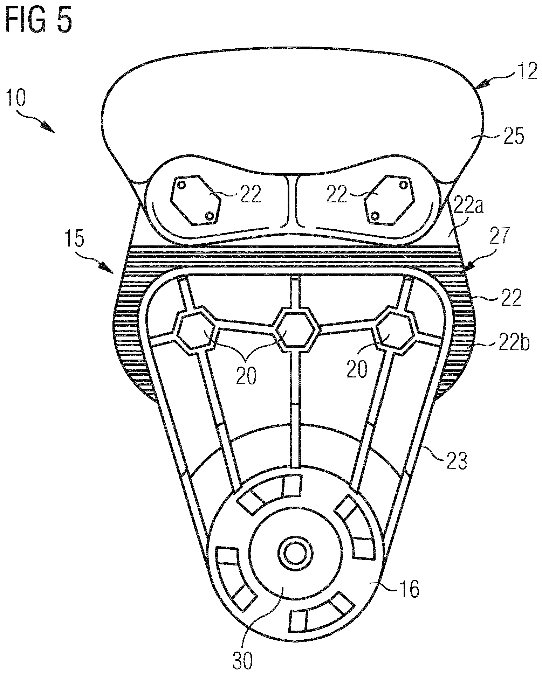

Anhand der **Figuren 3 bis 5** wird nachfolgend ein Befestigungssystem 10 gemäß einer anderen bevorzugte Ausführungsfom der Erfindung im Detail beschrieben. Dabei zeigt Figur 3 das Befestigungssystem 10 als schematische Ansicht von vorne, während die Figuren 4 und 5 das Befestigungssystem 10 in einer schematischen Explosionsdarstellung bzw. als schematische Ansicht seiner Rückseite zeigen. Zur Vereinfachung ist in diesen Figuren das zweite Befestigungselement 14 nicht dargestellt. Bis auf einige Unterschiede ist das Befestigungssystem gleich bzw. ähnlich zu demjenigen von Fig. 1 ausgestaltet.

Wie oben unter Bezugnahme auf Figur 1 beschrieben, dient das plattenartig gestaltete erste Befestigungselement 12 zur flächigen Befestigung an der Tragstruktur 13. Dabei wird es mit seiner Rückseite 25, die in Figur 5 sichtbar ist und eine Befestigungsfläche bildet, an der Tragestruktur 12 befestigt, das heißt zum Beispiel an einer Seitenfläche des Spants.

An der Vorderseite 26 des ersten Befestigungselements 12, die in Fig. 3 sichtbar ist, ist das erste Verbindungselement 22 der Verbindungsanordnung 15 mithilfe der Schrauben 20 verschraubt. Hierzu bildet die Vorderseite 26 des ersten Befestigungselements 12 die Befestigungsfläche 12a zum Befestigen des ersten Verbindungselement 22. Dem entsprechend ist an der Rückseite 27 des ersten Verbindungselements 22 die Befestigungsfläche 22a vorgesehen (s. Fig. 5), die der Befestigungsfläche 12a des ersten Befestigungselements 12 gegenüber liegend angeordnet ist.

An dem ersten Verbindungselement 22 ist das zweite Verbindungselement 23 der Verbindungsanordnung 15 mittels der Schrauben 24 befestigt. Hierzu ist an der Rückseite 27 des ersten Verbindungselements 22 eine Verbindungsfläche 22b zum Verbinden mit dem zweiten Verbindungselement 23 ausgebildet (s. Fig. 5).

Die Verbindung zwischen dem ersten Verbindungselement 22 und dem zweiten Verbindungselement 23 ist so ausgebildet, dass die beiden Verbindungselemente 22, 23 relativ zueinander in zwei Richtungen bewegbar sind, die orthogonal zueinander ausgerichtet sind, wie es in Figur 4 durch Doppelpfeile gekennzeichnet ist. Dadurch kann eine Einstellung bzw. Justage der Position des zweiten Verbindungselements 23 in Bezug auf das erste Verbindungselement 22 erfolgen, und die passende Position kann durch anschließendes Festziehen der Schrauben 24 fest und sicher fixiert werden

Zur Justierung und Fixierung der gewünschten Lage des zweiten Verbindungselements 23, das in Bezug auf das erste Verbindungselement 22 bewegbar ist, dient zusätzlich eine Verzahnung, die auf der Rückseite 27 des ersten Verbindungselement 22 ausgebildet ist. Korrespondierend dazu ist auf der gegenüber angeordneten Verbindungsfläche 23a des zweiten Verbindungselements 23, die in Fig. 4 sichtbar ist, ebenfalls eine Verzahnung ausgebildet.

Durch Anziehen der Befestigungsschrauben 20 bzw. ihrer zugehörigen Muttern wird das zweite Verbindungselement 23 in der passenden bzw. gewünschten Position an dem ersten Verbindungselement 22 fixiert, indem die Verzahnungen ihrer korrespondierenden bzw. komplementären Verbindungsflächen 22b, 23a ineinandergreifen und dadurch eine hohe Stabilität gewährleisten.

Zusätzlich ist auf der anderen Seite des ersten Verbindungselements 22, d. h. an dessen Vorderseite 28, die eine weitere Verbindungsfläche bildet und in den Figuren 3 und 4 sichtbar ist, eine Verzahnungsplatte 29 angeordnet. Die Verzahnungsplatte 29 weist an ihrer Seite, die dem ersten Verbindungselement 22 zugewandt und daher hier nicht sichtbar ist, ebenfalls eine Verzahnung auf, um mit einer korrespondierenden bzw. komplementären Verzahnung an der Vorderseite 28 des ersten Verbindungselement 22 ineinanderzugreifen.

Somit ist das erste Verbindungselement 22 flächig und beidseitig jeweils über Verzahnungen zwischen dem zweiten Verbindungselement 23 und der Verzahnungsplatte 29 befestigt, wobei nach dem Justieren des zweiten Verbindungselements 23 die Fixierung durch Anziehen der Befestigungsschrauben 24 erfolgt, die sich durch das zweite Verbindungselement 23, das erste Verbindungselemente 22 und die Verzahnungsplatte 29 hindurch erstrecken und in zugehörigen Muttern eingreifen (siehe Fig. 4).

In der Tragöse 16 des zweiten Verbindungselements 23 ist ein Schwingungsdämpfer 30 angeordnet und durch einen Verschlussring 31 fixiert. Dadurch wird das Staufach 11 und weitere Innenraumkomponenten des Flugzeugs von Lärm und Vibrationen entkoppelt.

Das erste Befestigungselement 12 ist wie bei der in Fig. 1 gezeigten Ausführungsform ein A-Bracket bzw. A-Halter, der aus Aluminium gefertigt ist. Das erste Verbindungselement 22 und das zweite Verbindungselement 23 sind wie oben beschrieben als B-Bracket bzw. B-Halter ausgebildet und aus Kunststoff gefertigt, bevorzugt aus kohlefaserverstärktem oder glasfaserverstärktem Kunststoff. Durch diese Maßnahmen und die hier dargestellte Konstruktion wird ein besonders geringes Gewicht des Befestigungssystems 10 bei sehr hoher Tragkraft erreicht.

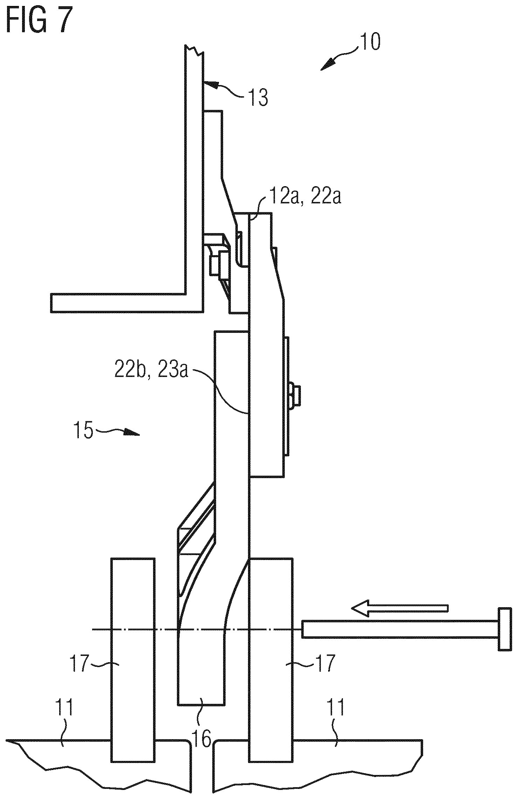

Die **Figuren 6** **und** **7** zeigen das Befestigungssystem 10 in einer Seitenansicht, zusammen mit der Tragstruktur 13, an der es befestigt ist. Zusätzlich zeigt Figur 7 auch die Befestigung der Tragöse 16 der Verbindungsanordnung 15 zwischen zwei Tragösen 17 von zweiten Befestigungselementen 14, an denen eine Anordnung von Staufächern 11 befestigt ist. Das Befestigungssystem 10 ist wie oben unter Bezugnahme auf die Figuren 3 bis 5 beschrieben ausgestaltet.

Wie in Fig. 6 gezeigt, ist die Tragstruktur 13 bzw. der Spant des Flugzeugrumpfes zusammen mit dem daran befestigten ersten Befestigungselement 12 von der Isolationsschicht 21 umschlossen. Im Bereich der Befestigungsflächen 12a, 22a und auch außerhalb von diesen erstreckt sich die Isolationsschicht 21 durchgehend zwischen dem ersten Befestigungselement 12 und dem ersten Verbindungselement 22 der Verbindungsanordnung 15. Auf diese Weise ist die Tragstruktur 13 mit dem daran befestigten ersten Befestigungselement 12 vollständig bzw. ohne Unterbrechungen gegenüber der Verbindungsanordnung 15 und dem daran gehaltenen Staufach isoliert. Die Isolationsschicht 21 ist zur Wärme- und Feuchtigkeitsisolierung ausgestaltet.

Bei der in den Figuren 3 bis 7 gezeigten Ausführungsform des Befestigungssystems 10 sind die Verbindungsflächen 22b, 23a zur gegenseitigen Befestigung der Verbindungselemente 22, 23 im zusammengefügten Zustand des Befestigungssystems 10 parallel zur Befestigungsfläche 12a, 22a zwischen dem ersten Befestigungselement 12 und dem ersten Verbindungselement 22 ausgerichtet.

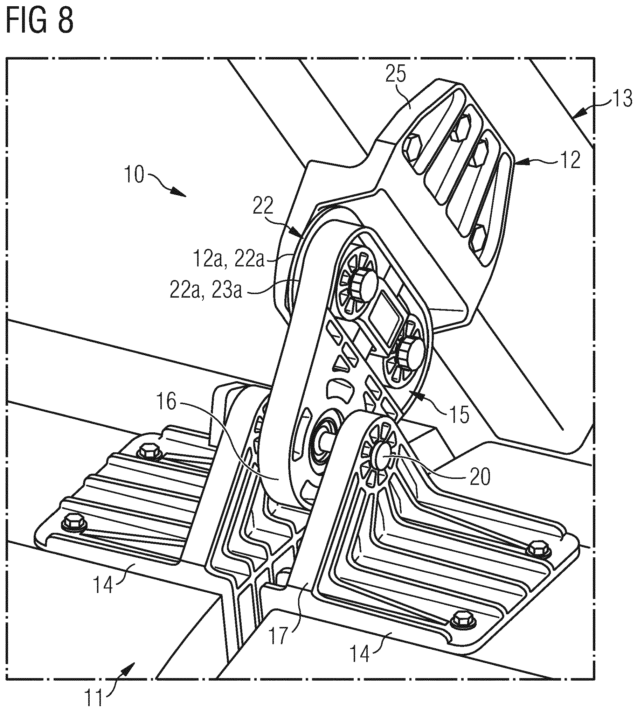

**Figur 8** zeigt eine weitere Ausführungsform des Befestigungssystems 10. Ebenso wie bei den oben beschriebenen Ausführungsformen umfasst die Verbindungsanordnung 15 ein erstes Verbindungselement 22 und ein zweites Verbindungselement 23, die relativ zueinander in zwei Freiheitsgraden bewegbar sind, wie in Figur 4 gezeigt und oben bereits erläutert. Jedoch ist bei der in Figur 8 gezeigten Ausführungsform das erste Verbindungselemente 22 als eine relativ dünne Platte ausgestaltet, die flächig zwischen dem zweiten Verbindungselement 23 und dem ersten Befestigungselement 12 angeordnet ist.

Das erste Befestigungselement 12 bildet einen Versatz zwischen seiner Befestigungsfläche 25 zur Befestigung an der Tragstruktur 13 und seiner Befestigungsfläche 12a zur Befestigung der Verbindungsanordnung 15 bzw. des ersten Verbindungselements 22.

Auch hier kann, wie oben unter Bezugnahme auf Fig. 6 beschrieben, die Isolationsschicht 21 durchgehend zwischen dem ersten Befestigungselement 12 und dem ersten Verbindungselement 22 der Verbindungsanordnung 15 positioniert bzw. installiert werden, um im montierten Zustand eine durchgehende und vollständige Isolierung der Tragstruktur 13 mit den daran befestigten ersten Befestigungselementen 12 gegenüber der Verbindungsanordnung 15 zu bewirken.

Alternativ dazu kann die in Fig. 6 dargestellte Isolationsschicht 21 zwischen der Tragstruktur 13 und dem ersten Befestigungselement 12 eingeklemmt werden. Hierzu ist das erste Befestigungselement 12 mit der Tragstruktur 13 verschraubt.

Die Verbindungsflächen zur gegenseitigen Verbindung der Verbindungselemente 22, 23 werden durch eine Seite 22b des ersten Verbindungselements 22 und durch die gegenüberliegende Seite 23a des zweiten Verbindungselements 23 gebildet. Diese Verbindungsflächen 22b, 23a sind parallel zur Befestigungsfläche 25 des ersten Befestigungselements 12 an der Tragstruktur 13 ausgerichtet. Sie sind auch parallel zu den Verbindungsflächen 12a, 22a ausgebildet, die zur Befestigung des ersten Verbindungselements 22 am ersten Befestigungselement 12 dienen.

Auch bei dieser Ausführungsform ist das erste Befestigungselement 12 als ein A-Halter ausgebildet, wohingegen das zweite Verbindungselement 23 als ein B-Halter ausgebildet ist, um die Staufächer 11 zu befestigen. Die Verbindungselemente 22, 23 und das zweite Befestigungselement 14, das zur Befestigung der Staufächer 11 ausgebildet ist, sind aus Kunststoff gefertigt, vorzugsweise aus faserverstärktem und insbesondere aus kohlefaserverstärktem und/oder glasfaserverstärktem Kunststoff.

Die Erfindung bietet insbesondere folgende Vorteile:
Durch die Aufteilung des Befestigungssystems 10 in A- und B-Halter bzw. A- und B-Brackets ist es möglich, eine Schicht zur Isolierung der Primärstruktur zwischen den beiden Haltern zu installieren und dabei einen Schnitt in der Isolierschicht zu vermeiden. Dadurch wird verhindert, dass Kondenswasser in die Kabine gelangt.

Die Erfindung bietet außerdem den weiteren Vorteil, dass das Befestigungssystem in zwei bevorzugt senkrecht zueinanderstehenden Richtungen einstellbar ist. Dabei ermöglichen einander gegenüberliegende Verzahnungen das Einstellen der Schnittstelle zum Deckencontainer bzw. zum Overhead Storage Compartment (OHSC).

Darüber hinaus werden die Innenraumkomponenten von Lärm oder Vibrationen entkoppelt. Dies wird durch den Vibrationsdämpfer ermöglicht, der bevorzugt in den B-Halter bzw. in das Verbindungselement integriert ist und durch einen einfachen Schnappverschlussring in dem B-Halter fixiert ist. Diese Fixierung erlaubt ein sehr leichtes Ersetzen des Vibrationsdampfers nach dem Erreichen seiner Lebensdauer.

Zur Montage des Befestigungssystems 10 und seiner Teile dienen marktübliche Standardteile, d. h., es sind keine speziellen Befestigungsmittel oder speziell entwickelte Lager notwendig.

Die Erfindung basiert insbesondere auf drei Teilen eines Bracket- bzw. Befestigungskonzepts, wobei jedes Teil vorteilhaft aus faserverstärktem Kunststoff insbesondere mittels Spritzgussverfahren hergestellt werden kann.

Um ein Korrosionsrisiko zu vermeiden, das durch die Kombination von kohlefaserverstärktem Kunststoff und Aluminium erzeugt werden kann, werden gemäß der Erfindung zwei mögliche Lösungen vorgeschlagen, die auch miteinander kombinierbar sind. Zum einen kann zur Entkopplung der Materialien eine nichtleitende Materialschicht zwischen dem kohlefaserverstärkten Kunststoff und dem Aluminium angeordnet werden. Zum anderen kann anstatt einer Kohlefaserverstärkung eine Glasfaserverstärkung vorgesehen sein.

Um die Tragkraft und Belastungsfähigkeit des Befestigungssystems noch weiter zu erhöhen, kann ein zusätzlicher Faser-Einsatz mittels Überformungstechnologie erzeugt werden, was die Tragfähigkeit der Halter bzw. der Elemente des Befestigungssystems weiter erhöht. Das Überformen ist ein Spritzgussverfahren, bei dem ein Material auf ein zweites Material geformt wird, das typischerweise ein festes Plastik- bzw. Kunststoffmaterial ist. Dadurch kann das aufgeformte thermoplastische Material eine starke Bindung mit dem Kunststoff eingehen und in der Benutzerumgebung aufrechterhalten werden.

Ein weiterer Vorteil liegt darin, dass die Verbindung zum Staufach bzw. Deckencontainer durch einen einfachen Standardbolzen erfolgen kann. Der Bolzen befestigt bevorzugt zwei Staufächer bzw. OHSCs an einem Bracket bzw. Halter.

### Bezugszeichenliste:

- 10: Befestigungssystem
- 11: Staufach
- 12: erstes Befestigungselement
- 12a: Befestigungsfläche für die Verbindungsanordnung
- 13: Tragstruktur
- 14: zweites Befestigungselement
- 15: Verbindungsanordnung
- 16: Tragöse
- 17: Tragöse
- 18: Befestigungsbolzen
- 20: Schrauben
- 21: Isolationsschicht
- 22: erstes Verbindungselement
- 22a: Befestigungsfläche für die Befestigung am ersten Befestigungselement
- 22b: Verbindungsfläche zum zweiten Verbindungselement
- 23: zweites Verbindungselement
- 23a: Verbindungsfläche zum ersten Verbindungselement
- 24: Befestigungsmittel bzw. Schrauben
- 25: Rückseite bzw. Befestigungsfläche des ersten Befestigungselements
- 26: Vorderseite des ersten Befestigungselements
- 27: Rückseite des ersten Verbindungselements
- 28: Vorderseite bzw. Verbindungsfläche des ersten Verbindungselements
- 29: Verzahnungsplatte

- 120: Deckencontainer
- 101: erstes Befestigungselement
- 102: Tragstruktur bzw. Spant
- 103: zweites Befestigungselement
- 106: drittes Befestigungselement
- 107: Schrauben
- 108: Doppeltragöse
- 109, 110: weitere Tragöse

## Patentansprüche

1. Befestigungssystem zur hängenden Montage von Staufächern insbesondere in Flugzeugen, umfassend:
ein erstes Befestigungselement (12), das zur Befestigung an einer Tragstruktur (13) ausgebildet ist;
ein zweites Befestigungselement (14), das zur Befestigung an einem Staufach (11) zur Aufnahme von Gegenständen ausgebildet ist; und
eine Verbindungsanordnung (15), die zur flächigen Befestigung auf dem ersten Befestigungselement (12) ausgebildet ist,
wobei die Verbindungsanordnung (15) und das zweite Befestigungselement (14) jeweils eine Tragöse (16, 17) zur Aufnahme eines Befestigungsbolzens (18) umfassen, um die Verbindungsanordnung (15) an dem zweiten Befestigungselement (14) zu befestigen; und
das erste Befestigungselement (12) und die Verbindungsanordnung (15) jeweils eine Befestigungsfläche (12a, 22a) zur gegenseitigen Befestigung aufweisen, so dass zwischen den Befestigungsflächen (12a, 22a) und/oder zwischen der Tragstruktur (13) und dem ersten Befestigungselement (12) eine durchgehende Isolationsschicht (21) zur Isolierung der Tragstruktur (13) positionierbar ist, um die Tragstruktur (13) durchgehend gegenüber der Verbindungsanordnung (15) zu isolieren, die Verbindungsanordnung (15) ein erstes Verbindungselement (22) und mindestens ein zweites Verbindungselement (23) umfasst, die in ihrer Lage relativ zueinander einstellbar und fixierbar sind, **dadurch gekennzeichnet, dass** die Verbindungselemente (22, 23) jeweils eine Verbindungsfläche (22b, 23a) mit einer Verzahnung zur gegenseitigen Fixierung aufweisen.

2. Befestigungssystem nach einem der vorhergehenden Ansprüche, **dadurch gekennzeichnet, dass** die Verbindungsanordnung (15) aus Kunststoff gefertigt ist.

3. Befestigungssystem nach einem der vorhergehenden Ansprüche, **gekennzeichnet durch** eine mit einer Verzahnung versehene Verzahnungsplatte (29), die aus Kunststoff gefertigt ist und an einer verzahnten Fläche (28) eines der Verbindungselemente (22, 23) befestigbar ist, um das Verbindungselement (22) zwischen der Verzahnungsplatte (29) und dem anderen Verbindungselement (23) durch gegenseitige Verzahnung in einer gewünschten Position zu fixieren.

4. Befestigungssystem nach Anspruch 2 oder 3, **dadurch gekennzeichnet, dass** der Kunststoff ein kohlefaserverstärkter Kunststoff und/oder ein glasfaserverstärkter Kunststoff ist.

5. Befestigungssystem nach einem der vorhergehenden Ansprüche, **dadurch gekennzeichnet, dass** das erste Befestigungselement (12) aus Aluminium gefertigt ist.

6. Befestigungssystem nach einem der vorhergehenden Ansprüche, **gekennzeichnet durch** einen Schwingungsdämpfer (30), der in zumindest einer der Tragösen (16, 17) angeordnet ist.

7. Befestigungssystem nach einem der vorhergehenden Ansprüche, **dadurch gekennzeichnet, dass** die Verbindungsanordnung (15) durch Spritzgießen und/oder durch Überformen hergestellt ist.

8. Befestigungssystem nach einem der Ansprüche 3 bis 7, **dadurch gekennzeichnet, dass** die Verzahnungsplatte (29) durch Spritzgießen und/oder durch Überformen hergestellt ist.

9. Befestigungssystem nach einem der Ansprüche 1 bis 8, **dadurch gekennzeichnet, dass** die Verbindungsflächen (22b, 23a) der Verbindungselemente (22, 23) im zusammengefügten Zustand des Befestigungssystems (10) zu der Befestigungsfläche (25) zur Befestigung des ersten Befestigungselements (12) an der Tragestruktur (13) parallel ausgerichtet sind.

10. Befestigungssystem nach einem der vorhergehenden Ansprüche 1 bis 9, **dadurch gekennzeichnet, dass** die Verbindungsflächen (22b, 23a) der Verbindungselemente (22, 23) im zusammengefügten Zustand des Befestigungssystems (10) zu der Befestigungsfläche (12a, 22a) zwischen dem ersten Befestigungselement (12) und dem ersten Verbindungselement (22) parallel ausgerichtet sind

11. Befestigungssystem nach einem der Ansprüche 1 bis 9, **dadurch gekennzeichnet, dass** die Verbindungsflächen (22b, 23a) der Verbindungselemente (22, 23) im zusammengefügten Zustand des Befestigungssystems (10) zu der Befestigungsfläche (12a, 22a) zwischen dem ersten Befestigungselement (12) und dem ersten Verbindungselement (22) senkrecht ausgerichtet sind.

12. Befestigungssystem nach einem der vorhergehenden Ansprüche, **dadurch gekennzeichnet, dass** das zweite Verbindungselement (23) zumindest in einem Teilbereich plattenförmig ausgebildet ist und die Tragöse (16) der Verbindungsanordnung (15) in dem plattenförmigen Bereich des zweiten Verbindungselement (23) ausgebildet ist.

13. Befestigungssystem nach einem der vorhergehenden Ansprüche, **dadurch gekennzeichnet, dass** das zweite Verbindungselement (23) flächig ausgebildet ist, wobei es von einem relativ breiteren Teil im Bereich seiner Verbindungsfläche (23a) zur Verbindung mit dem zum ersten Verbindungselement (22) stetig in einen relativ schmaleren Teil übergeht, in dem die Tragöse (16) der Verbindungsanordnung (15) ausgebildet ist.

## Claims

1. Fastening system for the suspended installation of stowage compartments, in particular in aircraft, comprising:
a first fastening element (12), which is designed for fastening on a supporting structure (13);
a second fastening element (14), which is designed for fastening on a stowage compartment (11) for accommodating items; and
a connecting arrangement (15), which is designed for surface-area fastening on the first fastening element (12),
wherein the connecting arrangement (15) and the second fastening element (14) each comprise a supporting eyelet (16, 17) for accommodating a fastening bolt (18), in order for the connecting arrangement (15) to be fastened on the second fastening element (14); and
the first fastening element (12) and the connecting arrangement (15) each have a fastening surface (12a, 22a) for fastening on one another, and therefore a continuous insulation layer (21) can be positioned between the fastening surfaces (12a, 22a), and/or between the supporting structure (13) and the first fastening element (12), for the purpose of insulating the supporting structure (13), in order for the supporting structure (13) to be insulated throughout in relation to the connecting arrangement (15), and the connecting arrangement (15) comprises a first connecting element (22) and at least one second connecting element (23), which can be adjusted and fixed in position relative to one another, **characterized in that** the connecting elements (22, 23) each have a connecting surface (22b, 23a) with a toothing formation for fixing on one another.

2. Fastening system according to one of the preceding claims, **characterized in that** the connecting arrangement (15) is produced from plastic.

3. Fastening system according to one of the preceding claims, **characterized by** a toothing plate (29) which is provided with a toothing formation, is produced from plastic and can be fastened on a toothed surface (28) of one of the connecting elements (22, 23) in order for the connecting element (22) to be fixed in a desired position between the toothing plate (29) and the other connecting element (23) by mutual toothing engagement.

4. Fastening system according to Claim 2 or 3, **characterized in that** the plastic is a carbon-fibre-reinforced plastic and/or a glass-fibre-reinforced plastic.

5. Fastening system according to one of the preceding claims, **characterized in that** the first fastening element (12) is produced from aluminium.

6. Fastening system according to one of the preceding claims, **characterized by** a vibration damper (30), which is arranged in at least one of the supporting eyelets (16, 17).

7. Fastening system according to one of the preceding claims, **characterized in that** the connecting arrangement (15) is produced by injection moulding and/or by overmoulding.

8. Fastening system according to one of Claims 3 to 7, **characterized in that** the toothing plate (29) is produced by injection moulding and/or by overmoulding.

9. Fastening system according to one of Claims 1 to 8, **characterized in that**, in the joined-together state of the fastening system (10), the connecting surfaces (22b, 23a) of the connecting elements (22, 23) are oriented parallel to the fastening surface (25) for fastening the first fastening element (12) on the supporting structure (13).

10. Fastening system according to one of preceding Claims 1 to 9, **characterized in that**, in the joined-together state of the fastening system (10), the connecting surfaces (22b, 23a) of the connecting elements (22, 23) are oriented parallel to the fastening surface (12a, 22a) between the first fastening element (12) and the first connecting element (22).

11. Fastening system according to one of Claims 1 to 9, **characterized in that**, in the joined-together state of the fastening system (10), the connecting surfaces (22b, 23a) of the connecting elements (22, 23) are oriented perpendicularly in relation to the fastening surface (12a, 22a) between the first fastening element (12) and the first connecting element (22).

12. Fastening system according to one of the preceding claims, **characterized in that** the second connecting element (23) is of at least partially plate-like design, and the supporting eyelet (16) of the connecting arrangement (15) is formed in the plate-like region of the second connecting element (23).

13. Fastening system according to one of the preceding claims, **characterized in that** the second connecting element (23) is of planar design, wherein it merges continuously from a relatively wide part in the region of its connecting surface (23a) for connection to the first connecting element (22) into a relatively narrow part, in which the supporting eyelet (16) of the connecting arrangement (15) is formed.

## Revendications

1. Système de fixation pour le montage suspendu de compartiments de rangement, en particulier dans des avions, comprenant :
un premier élément de fixation (12), qui est conçu pour être fixé à une structure porteuse (13) ;
un deuxième élément de fixation (14), qui est conçu pour être fixé à un compartiment de rangement (11) destiné à recevoir des objets ; et
un ensemble de liaison (15) qui est conçu pour être fixé à plat sur le premier élément de fixation (12),
l'ensemble de liaison (15) et le deuxième élément de fixation (14) comprenant chacun un œillet de support (16, 17) destiné à recevoir un boulon de fixation (18) pour fixer l'ensemble de liaison (15) sur le deuxième élément de fixation (14) ; et
le premier élément de fixation (12) et l'ensemble de liaison (15) présentant chacun une surface de fixation (12a, 22a) pour la fixation mutuelle, de sorte qu'une couche isolante continue (21) est apte à être positionnée entre les surfaces de fixation (12a, 22a) et/ou entre la structure porteuse (13) et le premier élément de fixation (12) pour isoler la structure porteuse (13), afin d'isoler la structure porteuse (13) de manière continue par rapport à l'ensemble de liaison (15), l'ensemble de liaison (15) comprend un premier élément de liaison (22) et au moins un deuxième élément de liaison (23) qui sont aptes à être réglés et fixés dans leur position l'un par rapport à l'autre, **caractérisé en ce que** les éléments de liaison (22, 23) présentent chacun une surface de liaison (22b, 23a) avec une denture pour une fixation mutuelle.

2. Système de fixation selon l'une des revendications précédentes, **caractérisé en ce que** l'ensemble de liaison (15) est fabriqué en matière plastique.

3. Système de fixation selon l'une des revendications précédentes, **caractérisé par** une plaque à denture (29) pourvue d'une denture, qui est fabriquée en matière plastique et qui est apte à être fixée sur une surface dentée (28) de l'un des éléments de liaison (22, 23), afin de fixer l'élément de liaison (22) entre la plaque à denture (29) et l'autre élément de liaison (23) dans une position souhaitée par imbrication mutuelle de dentures.

4. Système de fixation selon la revendication 2 ou la revendication 3, **caractérisé en ce que** la matière plastique est une matière plastique renforcée par des fibres de carbone et/ou une matière plastique renforcée par des fibres de verre.

5. Système de fixation selon l'une des revendications précédentes, **caractérisé en ce que** le premier élément de fixation (12) est fabriqué en aluminium.

6. Système de fixation selon l'une des revendications précédentes, **caractérisé par** un amortisseur de vibrations (30) qui est agencé dans au moins l'un des anneaux porteurs (16, 17).

7. Système de fixation selon l'une des revendications précédentes, **caractérisé en ce que** l'ensemble de liaison (15) est réalisé par moulage par injection et/ou par surmoulage.

8. Système de fixation selon l'une des revendications 3 à 7, **caractérisé en ce que** la plaque à denture (29) est réalisée par moulage par injection et/ou par surmoulage.

9. Système de fixation selon l'une des revendications 1 à 8, **caractérisé en ce que** les surfaces de liaison (22b, 23a) des éléments de liaison (22, 23) sont orientées, à l'état assemblé du système de fixation (10), parallèlement à la surface de fixation (25) pour la fixation du premier élément de fixation (12) sur la structure porteuse (13).

10. Système de fixation selon l'une des revendications précédentes 1 à 9, **caractérisé en ce que** les surfaces de liaison (22b, 23a) des éléments de liaison (22, 23) sont orientées parallèlement à la surface de fixation (12a, 22a) entre le premier élément de fixation (12) et le premier élément de liaison (22) à l'état assemblé du système de fixation (10).

11. Système de fixation selon l'une des revendications 1 à 9, **caractérisé en ce que** les surfaces de liaison (22b, 23a) des éléments de liaison (22, 23) sont orientées, à l'état assemblé du système de fixation (10), perpendiculairement à la surface de fixation (12a, 22a) entre le premier élément de fixation (12) et le premier élément de liaison (22).

12. Système de fixation selon l'une des revendications précédentes, **caractérisé en ce que** le deuxième élément de liaison (23) est réalisé en forme de plaque au moins dans une zone partielle, et l'œillet de support (16) de l'ensemble de liaison (15) est réalisé dans la zone en forme de plaque du deuxième élément de liaison (23).

13. Système de fixation selon l'une des revendications précédentes, **caractérisé en ce que** le deuxième élément de liaison (23) est plat, passant d'une partie relativement plus large dans la zone de sa surface de liaison (23a) pour la liaison avec le premier élément de liaison (22), en continu, à une partie relativement plus étroite dans laquelle est formé l'œillet de support (16) de l'ensemble de liaison (15).
